# EUROPEAN PATENT SPECIFICATION

(11) **EP 3 877 473 B1**
(45) Date of publication and mention of the grant of the patent: **27.07.2022**
(21) Application number: 20708563.0
(22) Date of filing: 19.02.2020
(51) Int. Cl.: C09D 11/101, C09D 11/38

(54) **UV CURABLE COMPOSITIONS**
UV-HÄRTBARE ZUSAMMENSETZUNGEN
COMPOSITIONS DURCISSABLES PAR UV

(30) Priority: 19.02.2019 US 201962807380 P
(43) Date of publication of application: 15.09.2021
(73) Proprietor: Sun Chemical Corporation, Parsippany, NJ 07054 (US)
(72) Inventor: HERLIHY, Shaun Lawrence, Bath Somerset BA3 4RT (GB); ILLSLEY, Derek Ronald, Bath Somerset BA3 4RT (GB)
(74) Representative: Carpmaels & Ransford LLP
(86) International application number: PCT/GB2020/050392
(87) International publication number: WO 2020/169966

(56) References cited:
- EP-A1- 2 230 283
- WO-A1-03/099947
- CN-A- 107 300 832
- US-A1- 2003 199 655
- US-A1- 2006 019 077
- US-A1- 2008 045 618

## Description

The present invention covers the most surprising finding that a hybrid cationic and acrylate cure composition based on vinyl ether and acrylate functionalities can be used to prepare inkjet inks or coatings with very low formulation viscosity and can be cured at very fast line speeds to give high gloss inks or coatings suitable for inkjet printers. This is counter to expectation by those skilled in the art that cationic curing is best achieved using cycloaliphatic epoxide technology either alone or in combination with vinyl ether compounds.

It is further surprising that the significant acrylate portion of the formulation is cured based on a predominantly cationic photoinitiator selection, with the thioxanthone element of the technology appreciated by those skilled in the art to only be usefully effective when combined with a tertiary amine synergist, which, in this case is not possible as it would poison the cationic cure based on neutralisation of the photo generated acid catalyst. Acrylate compounds would not be expected to cure based on the use of a cationic photoinitiator, and indeed, at the levels present in this invention would be expected to be highly detrimental to the cure speed and mechanical properties of the cured films.

It is also surprising that the cure speed of the ink and coating technology disclosed is similarly effective with both LED and medium pressure mercury curing lamps.

As will become apparent from the review of the background references, energy curable ink jet compositions containing vinyl ether monomers, such as triethylene glycol divinyl ether, have been used before in both free radical and cationic curable formulations.

The present application describes a number of examples suitable for inkjet printing, but it should be understood that the invention covers compositions that may be applied by any other coating/printing process where the use of a low viscosity highly reactive ink/coating technology would be beneficial. Thus, flexographic, offset, screen and gravure printing processes are covered by the current invention, as are roller, spray, and other coating methods.

### BACKGROUND

JP 2010143959 refers to the use of cationic curable formulation for inkjet inks containing greater than 80% of the total mass of cationic polymerizable compound as vinyl ether functional materials. The formulations are entirely cationic curing in nature and contain cycloaliphatic epoxides and oxetane technologies as co-reactants. The potential use of a reactant, well known to those skilled in the art as VEEA, containing both acrylate and vinyl ether is mentioned.

JP 2008280460 refers to inks based on the use of vinyl ether monomers in conjunction with a diallyl phthalate prepolymer, cured under LED light. The authors mention the need for the prepolymer to be at levels above 10% by weight in order to maintain adequate physical properties after cure, but not above 25% by weight due to the resultant high viscosity of the inks. The patent refers to the use of anthracene molecules as sensitizers but does not discuss or hint at the possibilities of thioxanthone sensitizers or the use of acrylate co-monomers.

EP 3019566 refers to an inkjet system containing both acrylate and vinyl ether functionalities. However, these are cured by a free radical photoinitiation mechanism and in addition contain primarily trifunctional or higher acrylate components, and explicitly limits mono and difunctional acrylates to a level of less than 10% by weight of the formulation.

EP 3162822 refers to an inkjet system containing vinyl ether materials cured by a cationic photoinitiator. However, these formulations are entirely cationic in nature and contain no free radical curing acrylate component nor hints at their possible inclusion. The formulations also contain both oxetane and cycloaliphatic epoxide compounds which are undesirable in the present invention on the basis of the more limited storage stability that this imparts, as would be known to those skilled in the art. This is based on the ring-opening polymerisation of epoxies and oxetanes by low concentrations of amine or acid which could be highly detrimental to the storage stability of a formulation. However, a vinyl ether-based formulation would not be prone to this.

EP 1551931 refers to an inkjet system containing vinyl ether and acrylate materials. However, this is a free radical curing system where the acrylate component is predominantly monofunctional, with only 10% by weight, preferably 5% by weight maximum of multifunctional acrylate monomers. The system contains 1-30% by weight, more preferably 7-15% by weight of vinyl ether monomer and contains no cationic initiator. The patent does not refer to, nor hint at the fact that this composition may be curable by a cationic mechanism and is familiar to those skilled in the art as a classic situation where a low viscosity vinyl ether monomer such as used in the patent is advantageous in reducing formulation viscosity but at levels of above 5-10% by weight the cure speed of the system is adversely affected. EP 1358283 from the same inventor refers to similar technology whereby the vinyl ether monomer is present in levels not exceeding 1-30% by weight, more preferably 7-15% by weight but the system contains much higher levels of multifunctional monomers. Again, the technology does not contain a cationic photoinitiator and is cured entirely by a free radical mechanism.

US 2005/0113476 refers to an inkjet system containing vinyl ether levels preferably greater than 40% wt. However, these are an entirely cationic curing system containing vinyl ether and optionally oxetane or cycloaliphatic epoxide. One exemplified formulation contains acrylate monomers, but this is an entirely acrylate formulation used as a reference comparison against the invention. The formulations disclosed use a UV cure dose of between 250 and 500 mJ/cm² which is entirely inappropriate for the subject of the present invention where the UV cure dose is typically below 200mJ/cm², more preferably 100mJ/cm², even more preferably 50 mJ/cm², and as such suitable for very high printing speed applications.

US 2008/0045618 discloses inkjet curable inks based on the use of a vinyl ether component or optionally a hybrid curing system based on a vinyl ether and a monoacrylate. The hybrid ink system may also include a hybrid monomer such as 2-(2-vinylethoxy) ethyl acrylate (VEEA) containing both a vinyl and an acrylate functionality. One of the key differences of the present invention over the disclosed patent is that US 2008/0045618 discloses the requirement for a free radical photoinitiator curing element to the formulation in order to affect the hybrid cure.

WO01/25288 discloses formulations which contain high quantities of vinyl ether monomer and the option of acrylate monomers and photoinitiators. However, this differs from the present invention in that the formulations are donor/acceptor complexes and an acceptor molecule such as maleic anhydride is required in the formulation in order for it to cure. In addition, the optional photoinitiators discussed are free radical type and no mention is made nor inferred of cationic curing mechanisms. The formulations of this prior art are also entirely unsatisfactory for the present application as the cure speeds with very high power 600 W/inch medium pressure mercury lamps are still of the order of 20-30 m/min, much too slow for the desired application in inkjet inks.

US 2003/0199655 discloses curable formulations for inkjet comprising a hybrid monomer containing both acrylate and vinyl ether components. This prior art quotes a comparative example formulation containing both a divinyl ether and a diacrylate monomer at equal levels along with a free radical photoinitiator and a cationic photoinitiator. However, these formulations are deemed by the inventors of quoted application as not to cure and as such would be wholly unsuitable for the present invention. In addition, the application does not teach that such combinations with the correct choice of materials are capable of producing highly reactive inkjet systems.

WO 2006/049729 refers to a non-pigmented inkjet receiving layer for an inkjet ink potentially combining both acrylate and vinyl ether components. However, it does not teach how to combine these components with an appropriate photoinitiator system to create a hybrid curing mechanism pigmented inkjet ink.

Currently, there is continued interest in UV curable inkjet systems, particularly for single pass inkjet printing. As inkjet printhead technology develops there is a drive to faster frequency jetting to deliver both improved print quality and faster press speeds. A consequence of this ongoing printhead development is that the viscosity requirement of the inks is becoming ever lower. In order to meet these needs, photoinitiator levels in a typical acrylate-based UV cured inkjet ink are now of the order of 10-15% by weight and further increases in cure speed are not achievable by this route as things like solubility limits for photoinitiators and the plasticisation effect of the high levels becomes a significant factor in the ink properties.

From the relevant background references for this invention it is clear that hybrid inkjet ink formulations based on both vinyl ether and acrylate functionalities that are cured via a cationic mechanism have not previously been disclosed. Vinyl ethers have been used in wholly cationic systems containing cycloaliphatic epoxides and oxetanes or a free radically cured combination of acrylate and vinyl ether containing only limited quantities of vinyl ether.

Accordingly, the present invention provides a UV-curable ink or coating composition comprising a vinyl ether containing monomer (and/or oligomer), an acrylate monomer (and/or oligomer), and a cationic photoinitiator that has low formulation viscosity. The ink or coating composition can be cured at very fast line speeds to give high gloss inks or coatings suitable for inkjet printers. In particular, the ink or coating composition of the present invention can cure at line speeds (also referred to as press speeds) in excess of 75 m/min and in some cases at line speeds in excess of 100 m/min or even 150 m/min. High gloss preferably means a 60 degree gloss level of greater than 70%.

The present invention enables UV-curable compositions of very low viscosity, which are advantageous with the latest, and future, generations of inkjet printhead technology which are driving to ever lower viscosity requirements to enable the faster frequency jetting of these printheads. By very low viscosity, it is preferably meant viscosities of less than 10 mPa.s, less than 7.5 mPa.s, or less than 5.0 mPa.s at 50 °C (measured using a Brookfield DV-II+ Pro Viscometer equipped with Spindle no. 18, at 100rpm).

One of the most surprising aspects of this invention is that formulations containing vinyl ether and significant levels (typically 30-40% by weight) of acrylate compounds can be cured by a cationic mechanism. Acrylate compounds are well known to those skilled in the art not to cure via this mechanism and such levels in a formulation would cause significant problems with both cure speed and mechanical properties after cure. When a thioxanthone or anthracene type sensitizer molecule is used in this invention it is to act as a sensitizer for the functioning of the iodonium salt and despite its usual function as a free radical photoinitiator for acrylate compounds it would not be expected to do so in the formulations of the current invention because it lacks any amine synergist with which it is well known to require to function in this manner. The use of a thioxanthone sensitizer allows the cure to be affected under UV-vis light, which would otherwise not be achievable with the iodonium salt photoinitiator alone. In addition, as is shown in the examples, the level of thioxanthone sensitizer for curing of the present invention is very low and would in no way be capable of providing an adequate cure response to the acrylate portion of the formulations should the mechanism be defined as an intra penetrating network of both cationically cured vinyl ether segments and free radically cured acrylate segments.

As is apparent from the foregoing, the identified background references have not disclosed, or alluded to, the use of cationic initiated vinyl ether acrylate hybrid during inkjet inks with such exceptional cure speed and desirable physical properties.

The present invention will be advantageous in printing and coating applications where the development of inkjet print heads continues to move towards lower viscosity requirements with increased line speed capability. These issues are resolvable due to the most surprising finding that a cationic initiated vinyl ether acrylate hybrid inkjet ink is capable of delivering exceptional cure speeds and good resistance properties at such a low viscosity.

The present invention is also suitable for use in printed electronics, for example, printing and coating applications used in the manufacture of electronic components including, but not limited to, UV solder masks and UV-curable dielectric compositions. The UV-curable compositions of the present invention are preferably applied by inkjet printing but may also be applied by any other suitable printing or coating method.

The use of a cationically cured vinyl ether and acrylate hybrid inkjet ink composition has not been previously disclosed. In particular, the use of such a formulating approach has not been disclosed to deliver exceptionally fast curing systems at viscosity low enough for the latest generation of inkjet print heads. In particular, the background references focus on either a wholly cationic system containing vinyl ethers, cycloaliphatic epoxides and oxetanes, or acrylate systems containing relatively low levels of vinyl ether monomers that are cured by a free radical mechanism.

The compositions of the invention are particularly useful for the preparation of highly reactive and very low viscosity systems that may be applied via any printing or coating method, although inkjet printing is the preferred method. The inventive compositions can be cured with doses of 100 mJ/cm² or less and deliver highly resistant surfaces.

Citation or identification of any document in this application is not an admission that such document is available as prior art to the present invention.

### SUMMARY OF THE INVENTION

The invention is further described by the following numbered paragraphs:
1. A UV-curable ink or coating composition comprising a blend of vinyl ether containing monomers (and/or oligomers) and acrylate monomers (and/or oligomers) and a cationic photoinitiator.
2. The composition according to paragraph 1 comprising greater than 20% (w/w) of vinyl ether containing monomer or oligomer.
3. The composition according to paragraph 1 comprising greater than 40% (w/w) of vinyl ether containing monomer or oligomer.
4. The composition according to any preceding paragraph which further comprises a UV sensitizer, where the sensitizer may be selected from any of a thioxanthone derivative, and anthracene derivative.
5. The composition according to any preceding paragraph wherein the cationic photoinitiator is an iodonium salt type.
6. The composition according to paragraph 1 wherein the cationic photoinitiator is a sulphonium salt type.
7. The composition according to any preceding paragraph wherein the concentration of the cationic photoinitiator is less than 5.0% (w/w).
8. The composition according to any preceding paragraph wherein the concentration of the UV sensitizer is less than 4.0% (w/w).
9. The composition according to any preceding paragraph wherein the ratio of cationic photoinitiator to sensitizer is greater than 1:1.
10. The composition according to any preceding paragraph wherein the total combined amount of cationic photoinitiator and sensitizer is less than 6.0% (w/w) of the total composition.
11. The composition according to any preceding paragraph which is suitable for inkjet printing.
12. The composition according to paragraph 11 which has a viscosity of less than 10.0mPa.s at application temperature (particularly 50 °C) when measured using a Brookfield DV-II+ Pro Viscometer equipped with Spindle no. 18, at 100 rpm .
13. The composition according to paragraph 11 which has a viscosity of less than 8.0mPa.s at application temperature (particularly 50 °C) when measured using a Brookfield DV-II+ Pro Viscometer equipped with Spindle no. 18, at 100 rpm.
14. The composition according to paragraph 11 which has a viscosity of less than 6.0mPa.s at application temperature (particularly 50 °C) when measured using a Brookfield DV-II+ Pro Viscometer equipped with Spindle no. 18, at 100 rpm.
15. A process for providing a cured ink or coating composition comprising applying the composition of any one or more of paragraphs onto a substrate and curing.
16. The process according to paragraph 15 wherein the composition is cured with a UV dose of less than 200 mJ/cm².
17. The process according to paragraph 15 wherein the composition is cured with a UV dose of less than 100 mJ/cm².
18. The process of paragraph 15 wherein the composition is cured under the action of a UV-LED light source.
19. The process according to any one or more of paragraphs 15-18 wherein the composition is printed via a single-pass inkjet printing process.
20. A printed article comprising 1 or more layers of the composition of any one or more of paragraphs 1-14.
21. A printed article resulting from the process of any one or more of paragraphs 15-19.

### DETAILED DESCRIPTION OF THE INVENTION

### Definitions

The present invention is directed towards coating and ink compositions comprising any blend of ethylenically unsaturated monomers and oligomers, where the ethylenically unsaturated groups may be vinyl ether or acrylate. Compositions according to the invention may be applied by any coating or printing method but flexographic and especially inkjet printing are preferred methods.

In particular, the present invention relates to a UV curable coating or ink composition comprising a vinyl ether monomer and/or oligomer, an acrylate monomer and/or oligomer and a cationic photoinitiator. Thus, the compositions of the present invention are curable, or are cured, via a cationic curing mechanism. Surprisingly, the compositions are curable, or cured, in the absence of a cycloaliphatic epoxide or oxetane co-reactant. In addition, an acceptor molecule such as maleic anhydride is not required for the composition of the present invention to be cured and the compositions of the present invention are curable, or are cured, in the absence of an acceptor molecule such as maleic anhydride.

The monomers and/or oligomers used in the present invention are suitably liquid at room temperature (i.e. 20 - 25 °C).

The invention covered here will contain a cationic photoinitiator and optionally a sensitizer material, particularly a thioxanthone or anthracene type sensitizer. When a thioxanthone or anthracene type sensitizer is used in this invention it preferably lacks any amine synergist. In particular, it is used in the absence of compounds containing amine groups or minimal amounts (i.e. less than 1 % w/w of the composition) of compounds containing amine groups. It is therefore believed that the thioxanthone or anthracene is not functioning as a free radical photoinitiator in the present invention. A free radical photoinitiator is not required in addition to the cationic photoinitiator and sensitizer to cure the composition of the present invention.

The concentration of the sensitizer is preferably less than 4.0% (w/w) of the composition. More preferably, the concentration of the sensitizer is less than 3.0% (w/w), less than 2.5% (w/w), less than 2% (w/w), less than 1.5% (w/w) or less than 1.0% (w/w). The concentration of the sensitizer can be as low as 0.8% (w/w), 0.7% (w/w), 0.6% (w/w), 0.5% (w/w), 0.4% (w/w), 0.3% (w/w) or 0.2% (w/w) of the composition.

There is no restriction on the type, blend or concentration of cationic photoinitiator and sensitizer material combination that can be used and the compositions of the present invention can include any of, but not limited to the following (and combinations thereof):
- Iodonium salt cationic photoinitiators, which are positively charged iodonium structures with a range of possible anions such as hexafluorophosphate, hexafluoroantimonate, hexafluoroarsenate or, tetrakis(pentafluorophenyl)borate. Examples of such compounds include 4,4'-dimethyl-diphenyl iodonium hexaflurorantimonate, bis(4-Dodecylphenyl)iodonium hexaflurorantimonate, 4,4'-dimethyl-diphenyl iodonium hexafluorophosphate, Isopropyl-4'-methyldiphenyliodonium, hexafluorophosphate, 4-methylphenyl-4(-(2-methylpropyl)phenyl)iodonium hexafluorophosphate, 4-Isopropyl-4'-methyldiphenyliodonium tetrakis(pentafluorophenyl)borate. Of these hexafluorophosphate type compounds, and particularly 4,4'-dimethyl-diphenyl iodonium hexafluorophosphate are preferred;

- Sulphonium salt cationic photoinitiators, which are positively charged sulphur structures with a range of possible anions such as hexafluorophosphate, hexafluoroantimonate, hexafluoroarsenate or, tetrakis(pentafluorophenyl)borate. Examples of such compounds include often complex mixtures of triarylsulphonium and methyl, alkyl or hydroxyethoxy substituted triaryl sulphonium salt compounds, 10-biphenyl-4-yl-2-isopropyl-9-oxo-pH-thioxanthen-10-ium hexafluorophosphate. Of these hexafluorophosphate type compounds, and particularly 10-biphenyl-4-yl-2-isopropyl-9-oxo-pH-thioxanthen-10-ium hexafluorophosphate are preferred;
- Thioxanthones such as; 2-4-diethylthioxanthone, isopropylthioxanthone, 2-chlorothioxanthone, and 1-chloro-4-propoxythioxanthone;
- α-hydroxyketones such as; 1-hydroxy-cyclohexyl-phenyl-ketone; 2-hydroxy-2-methyl-1-phenyl-1-propanone; 2-hydroxy-2-methyl-4'-tert-butyl-propiophenone; 2-hydroxy-4'-(2-hydroxyethoxy)-2-methyl-propiophenone; 2-hydroxy-4'-(2-hydroxypropoxy)-2-methyl-propiophenone; oligo 2-hydroxy-2-methyl-1-[4-(1-methyl-vinyl)phenyl]propanone; bis[4-(2-hydroxy-2-methylpropionyl)phenyl]methane; 2-Hydroxy-1-[1-[4-(2-hydroxy-2-methylpropanoyl)phenyl]-1,3,3-trimethylindan-5-yl]-2-methylpropan-1-one and 2-Hydroxy-1-[4-[4-(2-hydroxy-2-methylpropanoyl)phenoxy]phenyl]-2-methylpropan-1-one; and
- anthracene derivatives such as 9,10-diethoxy anthracene and 9,10- dibutoxy anthracene.

Polymeric sensitizers are also suitable, including, for example, polymeric thioxanthone derivatives (GENOPOL TX-1 or TX-2 from RAHN, Omnipol TX from IGM or Speedcure 7010 from Lambson).

As will be appreciated in the art, α-hydroxyketones such as those listed herein above are able to sensitise in the UV-B region (i.e. wavelengths of 280 - 315 nm) and UV-C region (i.e. wavelengths of 200 - 280 nm), whereas, thioxanthones and anthracenes are able to sensitise at longer UV wavelengths covering the UV-A region (i.e. wavelengths of 315 - 400nm), which covers the emissions likely to be encontered from UV-LED light sources. Preferably, the composition of the present invention comprises a sensitizer that is effective in the UV-A region.

Other free radical photoinitiators may also be added as long as they preferably do not contain nitrogen groups (or minimal amounts, i.e. less than 1% w/w of the composition, contain nitrogen groups), which would, as is well known to those skilled in the art, inhibit cationic curing. When a free radical photoinitiator is included in the present invention in addition to the cationic photoinitiator and sensitizer, then said free radical photoinitiator is in amounts of less than 5% w/w, preferably less than 2% w/w. In one embodiment, a free radical photoinitiator in addition to the cationic photoinitiator and sensitizer is not present in, or used to cure, the compositions of the present invention.

Suitable free radical photoinitiators include:
- Acylphosphine oxides such as: 2,4,6-trimethylbenzoyl-diphenylphosphine oxide; ethyl (2,4,6-trimethylbenzoyl)phenyl phosphinate, bis-(2,4,6-trimethylbenzoyl)-phenylphosphine oxide; and bis(2,6-dimethoxybenzoyl)-2,4,4-trimethylpentylphosphinoxide;
- Benzophenones such as: such as benzophenone, 4-phenylbenzophenone, and 4-methylbenzophenone; methyl-2-benzoylbenzoate; 4-benzoyl-4-methyldiphenyl sulphide; 4-hydroxybenzophenone; 2,4,6-trimethyl benzophenone; benzophenone-2-carboxy(tetraethoxy)acrylate; 4-hydroxybenzophenone laurate and 1-[-4-[benzoylphenylsulpho]phenyl]-2-methyl-2-(4-methylphenylsulphonyl)propan-1-one; and
- phenylglyoxylates such as: phenyl glyoxylic acid methyl ester; oxy-phenyl-acetic acid 2-[hydroxyl-ethoxy]-ethyl ester, or oxy-phenyl-acetic acid 2-[2-oxo-2-phenyl-acetoxy-ethoxy]-ethyl ester.

Examples of other suitable photoinitiators include diethoxy acetophenone; benzil; benzil dimethyl ketal; titanocen radical initiators such as titanium-bis(η 5-2,4-cyclopentadien-1-yl)-bis-[2,6-difluoro-3-(1H-pyrrol-1-yl)phenyl]; 9-fluorenone; camphorquinone; 2-ethyl anthraquinone; and the like.

As well as the vinyl ether component of compositions of this invention, compositions according to the invention may comprise a blend of free radically polymerizable monomers and oligomers. There is no particular limitation to these compounds as long as they preferably do not contain amine groups (or minimal amounts, i.e. less than 1% w/w of the composition, contain amine groups), which would, as appreciated by those skilled in the art inhibit the cationic curing element of the present invention. In addition, although their use is not precluded, it has been found that the use of monofunctional monomers is less desirable due to their tendency to result in inks with low gloss.

Examples of suitable monofunctional ethylenically unsaturated monomers include but are not limited to the following (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethyleneoxide and propylene oxide:
- isobutyl acrylate; cyclohexyl acrylate; iso-octyl acrylate; n-octyl acrylate; isodecyl acrylate; iso-nonyl acrylate; octyl/decyl acrylate; lauryl acrylate; 2-propyl heptyl acrylate; tridecyl acrylate; hexadecyl acylate; stearyl acrylate; isostearyl acrylate; behenyl acrylate; tetrahydrofurfuryl acrylate; 4-t.butyl cyclohexyl acrylate; 3,3,5-trimethylcyclohexane acrylate; isobornyl acrylate; dicyclopentyl acrylate; dihydrodicyclopentadienyl acrylate; dicyclopentenyloxyethyl acrylate; dicyclopentanyl acrylate; benzyl acrylate; phenoxyethyl acrylate; 2-hydroxy-3-phenoxypropyl acrylate; alkoxylated nonylphenol acrylate; phenylphenoxyethyl acrylate; cumyl phenoxyethyl acrylate; cyclic trimethylolpropane formal acrylate; 2(2-ethoxyethoxy) ethyl acrylate; polyethylene glycol monoacrylate; polypropylene glycol monoacrylate; caprolactone acrylate; ethoxylated methoxy polyethylene glycol acrylate; methoxy triethylene glycol acrylate; tripropyleneglycol monomethyl ether acrylate; diethylenglycol butyl ether acrylate; alkoxylated tetrahydrofurfuryl acrylate; ethoxylated ethyl hexyl acrylate; alkoxylated phenol acrylate; ethoxylated phenol acrylate; ethoxylated nonyl phenol acrylate; propoxylated nonyl phenol acylate; polyethylene glycol o-phenyl phenyl ether acrylate; ethoxylated p-cumyl phenol acrylate; ethoxylated nonyl phenol acrylate; alkoxylated lauryl acrylate; ethoxylated tristyrylphenol acrylate; acryloyl oxyethyl hydrogen succinate; octoxypolyethylene glycol acrylate; octafluoropentyl acrylate; acetoacetoxy ethyl acrylate; 2-methoxyethyl acrylate; 2-carboxyethyl acrylate; 4-hydroxy butyl acrylate.

Equivalent methacrylate compounds are also capable of being used, although those skilled in the art will appreciate that methacrylate compounds have lower reactivity than their equivalent acrylate counterparts.

Where acrylate monomers are used in the preparation of the inventive compositions it is preferable that they be multifunctional (including difunctional) with respect to their polymerizable groups. Examples of suitable multifunctional ethylenically unsaturated monomers include but are not limited to the following (and combinations thereof), where the terms ethoxylated refers to chain extended compounds through the use of ethyleneoxide, propoxylated refers to chain extended compounds through the use of propylene oxide, and alkoxylated refers to chain extended compounds using either or both ethyleneoxide and propylene oxide:
- 1,3-butylene glycol diacrylate; 1,4-butanediol diacrylate; neopentyl glycol diacrylate; ethoxylated neopentyl glycol diacrylate; propoxylated neopentyl glycol diacrylate; 2-methyl-1,3-propanediyl ethoxy acrylate; 2-methyl-1,3-propanediol diacrylate; ethoxylated 2-methyl-1,3-propanediol diacrylate; 3 methyl 1,5- pentanediol diacrylate; 2-butyl-2-ethyl-1,3-propanediol diacrylate; 1,6-hexanediol diacrylate; alkoxylated hexanediol diacrylate; ethoxylated hexanediol diacrylate; propoxylated hexanediol diacrylate; 1,9-nonanediol diacrylate; 1,10 decanediol diacrylate; ethoxylated hexanediol diacrylate; alkoxylated hexanediol diacrylate; diethyleneglycol diacrylate; triethylene glycol diacrylate; tetraethylene glycol diacrylate; polyethylene glycol diacrylate; propoxylated ethylene glycol diacrylate; dipropylene glycol diacrylate; tripropyleneglycol diacrylate; polypropylene glycol diacrylate; poly (tetramethylene glycol) diacrylate; cyclohexane dimethanol diacrylate; ethoxylated cyclohexane dimethanol diacrylate; alkoxylated cyclohexane dimethanol diacrylate; polybutadiene diacrylate; hydroxypivalyl hydroxypivalate diacrylate; tricyclodecanedimethanol diacrylate; 1,4-butanediylbis[oxy(2-hydroxy-3,1-propanediyl)] diacrylate; ethoxylated bisphenol A diacrylate; propoxylated bisphenol A diacrylate; propoxylated ethoxylated bisphenol A diacrylate; ethoxylated bisphenol F diacrylate; 2-(2-Vinyloxyethoxy)ethyl acrylate; dioxane glycol diacrylate; ethoxylated glycerol triacrylate; glycerol propoxylate triacrylate; pentaerythritol triacrylate; trimethylolpropane triacrylate; di- trimethylolpropane triacrylate; caprolactone modified trimethylol propane triacrylate; ethoxylated trimethylolpropane triacrylate; propoxylated trimethylol propane triacrylate; tris (2-hydroxy ethyl) isocyanurate triacrylate; e-caprolactone modified tris (2-hydroxy ethyl) isocyanurate triacrylate; melamine acrylate oligomer; pentaerythritol tetraacrylate; ethoxylated pentaerythritol tetraacrylate; di-trimethylolpropane tetra acrylate; dipentaerythritol pentaaacrylate; dipentaerythritol hexaaacrylate; ethoxylated dipentaerythritol hexaacrylate. Equivalent methacrylate compounds are also capable of being used, although those skilled in the art will appreciate that methacrylate compounds have lower reactivity than their equivalent acrylate counterparts.

The concentration of acrylate monomer or oligomer is greater than 20% (w/w) of the composition. Preferably, the concentration of the acrylate monomer or oligomer is greater than 25% (w/w) or greater than 30% (w/w) of the composition.

Examples of monomers comprising vinyl ether polymerizable groups other than acrylate include such as 2-(2-vinyloxyethoxy)ethyl(meth)acrylate (VEEA, VEEM), diethylene glycol divinyl ether(DVE2), triethylene glycol divinyl ether (DVE3), tripropylene glycol divinyl ether (RAPICURE DVE-3), ethyl vinyl ether, n-butyl vinyl ether, iso-butyl vinyl ether, tert-butyl vinyl ether, cyclohexyl vinyl ether (CHVE), 2-ethylhexyl vinyl ether (EHVE),dodecyl vinyl ether (DDVE), octadecyl vinyl ether(ODVE), 1-2-butanediol divinyl ether(BDDVE), 1-4,cyclohexanedimethanol divinylether (CHDM-di), hydroxybutyl vinylether (HBVE), 1-4-cyclohexanedimethanolmono vinylether (CHDM-mono), 1,2,4-trivinylcyclohexane (TVCH), vinylphosphonic acid dimethylester (VPA) or vinylphosphonic acid dimethyl ester (VPADME).

The concentration of vinyl ether monomer or oligomer is preferably greater than 20% (w/w). More preferably, the concentration of vinyl ether monomer or oligomer is greater than 40% (w/w).

As well as, or in place of free radically polymerizable acrylate monomers, any concentration and type of free-radically polymerizable acrylate oligomer, including but not restricted to, polyester acrylates, polyether acrylates and epoxy acrylates may be used. These may be particularly useful in tailoring the formulation viscosity or mechanical properties.

Thus, the formulation viscosity may be modified to meet some printing or coating applications, such as flexographic printing. For example, the viscosity of the composition can be increased by introducing a polyester acrylate oligomer, an epoxy acrylate oligomer or a urethane acrylate oligomer, such as an aliphatic polyester urethane diacrylate oligomer. An example of an aliphatic polyester urethane diacrylate oligomer is CN965 from Sartomer.

The use of multifunctional (including difunctional) acrylate monomers or oligomers is preferred in the invention for reasons of cure speed and the production of glossy print. The concentration of the multifunctional (including difunctional) acrylate monomer or oligomer is greater than 20% (w/w) of the composition. Preferably, the concentration of the multifunctional (including difunctional) acrylate monomer or oligomer is greater than 25% (w/w) or greater than 30% (w/w) of the composition.

If monofunctional acrylate monomers or oligomers are used in the present invention they are preferably in a concentration of less than 10% by weight of the composition. More preferably, monofunctional acrylate monomers or oligomers are in a concentration of less than 7% by weight, less than 5% by weight, or less than 1% by weight. Preferably, the compositions of the present invention do not contain monofunctional acrylate monomers or oligomers.

Where the compositions of the invention require colourants, suitable colorants include, but are not limited to organic or inorganic pigments and dyes. The dyes include but are not limited to azo dyes, anthraquinone dyes, xanthene dyes, azine dyes, combinations thereof and the like. Organic pigments may be one pigment or a combination of pigments, such as for instance Pigment Yellow Numbers 12, 13, 14, 17, 74, 83, 114, 126, 127, 150, 155, 174, 180, 188; Pigment Red Numbers 2, 22, 23, 48:1, 48:2, 52, 52:1, 53, 57:1, 112, 122, 166, 170, 184, 202, 266, 269; Pigment Orange Numbers 5, 16, 34, 36, 71; Pigment Blue Numbers 15, 15:3, 15:4; Pigment Violet Numbers 3, 19, 23, 27; and/or Pigment Green Number 7. Inorganic pigments may be one of the following non-limiting pigments: iron oxides, titanium dioxides, chromium oxides, ferric ammonium ferrocyanides, ferric oxide blacks, Pigment Black Number 7 and/or Pigment White Numbers 6 and 7. Other organic and inorganic pigments and dyes can also be employed, as well as combinations that achieve the colors desired.

The curable compositions of the invention may also contain other components which enable them to perform in their intended application. These other ink components include, but are not restricted to; stabilizers, wetting aids, slip agents, inert resins, antifoams, fillers, rheological aids, etc.

The compositions of the invention may also optionally comprise any blend of acrylic polymer or copolymer which is dissolved into it. These acrylic (co)polymers are usually prepared by the (thermal) free radical polymerization of blends of monomers including, but not restricted to, styrene, butyl (meth)acrylate, ethyl (meth)acrylate, methyl (meth)acrylate, isobutyl (meth)acrylate. Preferably, said acrylic (co)polymers are inert poly(acrylic) polymers free of acrylate groups. The acrylic polymer preferably has an average molecular weight of less than 20,000 g/mole and more preferably less than 10,000 g/mole. The molecular weight of such polymers can be measured by those techniques known in the art such as gel permeation chromatography. Examples of acrylic polymers include those supplied from Dianal, Elvacite Rohm and Haas and DSM, amongst others. The acrylic polymer is preferably present in the compositions at a concentration of between 2 and 20% (w/w).

Compositions of the current invention are preferably essentially free of any aprotic solvent, and protic solvents with boiling points of less than 150°C. However, if required, compositions of the current invention can be diluted with such solvents. Both organic and aqueous solvents may be used to dilute the curable compositions of the invention. The preferred maximum amount of any solvent that could be included in an ink composition is 10% (w/w).

The compositions prepared according to the invention are particularly suited to the preparation of inkjet, flexographic and offset printing inks and coatings, inkjet compositions being especially preferred.

The UV-curable composition according to the present invention is also suitable for use in printed electronics. Accordingly, the UV-curable composition can be used in the manufacture of electronic components, including but not limited to UV solder masks and UV-curable dielectric compositions. The UV-curable compositions are preferably applied by inkjet printing but may also be applied by any other suitable printing/coating method.

Although any UV light source can be used UV-LED sources are preferred and include, but not limited to, those emitting UV light at 355, 365, 375, 385, 395 and 405nm. Other possible UV light sources include high-pressure mercury bulb, a medium-pressure mercury bulb, a xenon bulb, a carbon arc lamp, a metal halide bulb, or sunlight, can be used. It should be appreciated by those skilled in the art that any UV light source may be used to cure compositions prepared according to the current invention.

UV cure dose is typically below 200mJ/cm², more preferably below 100mJ/cm², even more preferably below 50 mJ/cm². These low curing doses are suitable for very high printing speed applications.

A stabilizer may also be used in the composition to ensure good pot life of the ink, examples of which are nitroxy based stabilizers such as OHTEMPO, TEMPO, and Irgastab UV10. Phenolic stabilizers such as hydroquinone (HQ), methyletherhydroquinone (MEHQ), butylhydroxytoluene (BHT) and 2,6-di-tert-butyl-N,N-dimethylamino-p-cresol. Nitrosophenylhydroxylamine (NPHA) base inhibitors NPHA, amine salts, and metal salts (Al salt, N-PAL) plus the aromatic amine inhibitors diphenylamine(DPA) and phenylenediamine(PPD). Other suitable stabilizers are florstab UV-1, UV-8, Genorad 16 and 18.

Included in the ink formulation can be a suitable de-aerator, these prevent the formation of air and pinholes in the cured coating. These also reduce rectified diffusion which can cause reliability issues in the printhead. The following, non-limiting, products are available from EVONIK: TEGO AIREX 900, 910, 916, 920, 931, 936, 940, 944, 945, 950, 962, 980, 986.

Defoamers can also be included in the formulation, these prevent the formation of foam during manufacture of the ink and also while jetting. These are particularly important with recirculating printheads. Suitable, non-limiting, defoamers include TEGO FOAMEX N, FOAMEX 1488, 1495, 3062, 7447, 800, 8030, 805, 8050, 810, 815N, 822, 825, 830,831, 835, 840,842, 843, 845, 855, 860, 883, TEGO FOAMEX K3, TEGO FOAMEX K7/K8 and TEGO TWIN 4000 available from EVONIK. Available from BYK is BYK-066N, 088, 055, 057, 1790, 020, BYK-A 530, 067A, and BYK 354.

Surface Control Additives are often used to control the surface tension of the ink which is required to adjust the wetting on the face plate of the printhead and also to give the desired drop spread on the substrate or and in the case of multi pass inkjet printing wet on dry drop spread. They can also be used to control the level of slip and scratch resistance of the coating. Suitable surface control additives include but are not limited to TEGO FLOW300, 370,425, TEGO GLIDE 100, 110,130,406, 410,411, 415, 420, 432, 435, 440, 482, A115, B1484, TEGO GLIDE ZG 400, TEGO RAD2010, 2011, 2100, 2200N, 2250, 2300, 2500, 2600, 2650, 2700, TEGO TWIN 4000, 4100, TEGO WET 240, 250, 260,265,270, 280, 500, 505, 510 and TEGO WET KL245 all available from EVONIK. Available from BYK are BYK 333,337, BYK UV3500, BYK 378, 347,361, BYK UV3530, 3570, CERAFLOUR 998, 996, NANOBYK 3601, 3610, 3650 and CERMAT 258. From CYTEC EBECRYL 350, 1360, MODAFLOW 9200, EBECRYL 341. From SARTOMER the aliphatic silicone acrylate CN9800 may be used.

Average molecular weight. Unless otherwise stated, a reference to "molecular weight" or "average molecular weight" is a reference to the number average molecular weight (Mn). The molecular weight is suitably measured by techniques known in the art such as gel permeation chromatography. Preferably, molecular weight is measured by comparison with a polystyrene standard. For instance, molecular weight determination may be conducted on a Hewlett-Packard 1050 Series HPLC system equipped with two GPC Ultrastyragel columns, 103 and 104 Å (5 µm mixed, 300 mm x 19 mm, Waters Millipore Corporation, Milford, MA, USA) and THF as mobile phase. The skilled person will appreciate that this definition of molecular weight applies to polymeric materials which typically have a molecular weight distribution.

The present invention has been described in detail, including the preferred embodiments thereof. However, it will be appreciated that those skilled in the art, upon consideration of the present disclosure, may make modifications and/or improvements on this invention that fall within the scope and spirit of the invention.

### EXAMPLES

The following examples illustrate specific aspects of the present invention and are not intended to limit the scope thereof in any respect and should not be so construed. These examples are illustrative and are not to be read as limiting the scope of the invention as it is defined by the appended claims.

### EXAMPLE 1: Properties of cyan vinyl ether hybrid ink-jet ink

A series of compositions suitable for inkjet printing were prepared according to following formulation.

**Table 1: UV-Curable Cyan Inkjet Compositions**

| Component | % (w/w) |
|---|---|
| RAPICURE DVE-3 | 56.5 |
| OMNICAT 440 | 2 |
| SPEEDCURE DETX | 2.5 |
| TEGOGLIDE 410 | 0.2 |
| Cyan Pigment Dispersion | 8.8 |
| Test monomer | 30 |
| Total | 100.0 |

### Notes:

- RAPICURE DVE-3 is the monomer tripropylene glycol divinyl ether monomer (Ashland Specialities)
- OMNICAT440 is the cationic photoinitiator 4,4'-dimethyl-diphenyl iodonium hexafluorophosphate

### (IGM Resins)

- SPEEDCURE DETX is the sensitizer 2,4-diethylthioxanthone (Lambson)
- TEGOGLIDE 410 is the silicone polyether surfactant (Evonik)
- Cyan Pigment Dispersion is a proprietary dispersion containing 25.0% (w/w) of Pigment 15:4, the remainder comprising the dispersant, stabilizers and the monomer DPGDA

Table 2 provides the details of the monomer substance used in each example, along with the gloss levels of each print when cured. Samples were printed onto a coated Lenetta chart substrate at a thickness of approx. 12 microns using a Red "k-bar" applicator. The prints were cured using UV light from either a medium pressure mercury arc lamp at a dose of 50 mJ/cm² or using an Integration Technology SZ-180-395 395m LED lamp, also at a dose of 50 mJ/cm². Gloss measurements were taken over the black area of the substrate at angles of both 20° and 60° using a Dr Lange REFO 3 glossmeter.

Ink viscosity was recorded using a Brookfield DV-II+ Pro Viscometer equipped with Spindle no. 18, at 100rpm and at a temperature of 50°C. Unless otherwise stated, this method has been used throughout the application.

**Table 2: Gloss Measurements of UV-Curable Cyan Inkjet Compositions**

| Test Monomer | Monomer acrylate functionality | Viscosity at 50°C (cPs) | Gloss level using medium pressure mercury lamp | | Gloss levels using LED lamp | |
|---|---|---|---|---|---|---|
| | | | 20° gloss | 60° gloss | 20° gloss | 60° gloss |
| PHEA | 1 | 3.66 | 39.1 | 78.8 | 25.1 | 60.2 |
| ACMO | 1 | 3.69 | Does not cure | | | |
| PPEA | 1 | 4.59 | 55.7 | 87.5 | 22.7 | 58.9 |
| VEEA | 1^{∗} | 2.64 | 34.8 | 74.3 | 26.3 | 59.7 |
| TDA | 1 | 4.44 | 47.1 | 81.3 | 32.7 | 69.9 |
| IDA | 1 | 3.81 | 40.1 | 79.8 | 20.9 | 63 |
| CTFA | 1 | 3.21 | 53.9 | 85.4 | 29.1 | 63.4 |
| IBOA | 1 | 4.26 | 36.4 | 75.2 | 16.2 | 52.5 |
| TCDDMDA | 2 | 5.46 | 82.1 | 90.2 | 79.2 | 90.8 |
| HDDA | 2 | 3.42 | 77.6 | 89.1 | 40.7 | 75 |
| TPGDA | 2 | 3.60 | 77.2 | 88.7 | 64.6 | 81.8 |
| DPGDA | 2 | 3.42 | 74.6 | 88.2 | 72.9 | 86 |
| EOTMPTA | 3 | 4.44 | 81 | 90.4 | 79.8 | 88.9 |
| GPTA | 3 | 4.71 | 80.5 | 89.8 | 79.6 | 89.1 |
| DiTMPTA | 4 | 5.52 | 76.4 | 90.8 | 82.8 | 90.2 |

| | | | | | | |
|---|---|---|---|---|---|---|
| ^{∗}Monomer contains 1 acrylate and 1 vinyl ether functionality | | | | | | |

### Notes:

- PHEA is the monofunctional monomer phenoxyethyl acrylate (MIRAMER M-140 from Miwon)
- ACMO is the monofunctional acrylamide monomer acryloyl morpholine (ACMO from Rahn)
- PPEA is the monofunctional monomer phenyl phenoxyethyl acrylate (MIRAMER M-1142 from Miwon)
- VEEA is the monomer 2-(2-vinyloxyethoxy)ethyl acrylate from (VEEA from Nippon Shokubai)
- TDA is the monofunctional monomer tridecyl acrylate (SR 489 from Sartomer)
- IDA is the monofunctional monomer Isodecyl acrylate (SR 395 from Sartomer)
- CTFA is the monofunctional monomer cyclic TMP acrylate (SR531 from Sartomer)
- IBOA is the monofunctional monomer isobornyl acrylate (SR 506D from Sartomer)
- TCDDMDA is the difunctional monomer tricyclodecane dimethanol diacrylate (SR 833S from Sartomer)
- HDDA is the difunctional monomer hexanediol diacrylate (SR 238 from Sartomer)
- TPGDA is the difunctional monomer tripropyleneglycol diacrylate (SR 306 from Sartomer)
- DPGDA is the difunctional monomer dipropylene glycol diacrylate (SR 308 from Sartomer)
- EOTMPTA is the trifunctional monomer trimethylol propane triacrylate (SR454 from Sartomer)
- GPTA is the monomer glycerol propoxylate triacrylate (SR 9020 from Allnex)
- DiTMPTA is the monomer di-trimethylolpropane triacrylate (SR 355 from Sartomer)

The data in Table 2 clearly shows that monomers with a single acrylate functionality have a significantly lower gloss level than where difunctional or higher functional acrylate monomers are used. High gloss levels are a key functional requirement of UV curing inks and so the use of monofunctional monomers at any significant level would not be preferred and as such the examples covered by the Hexion patent US 2008/0045618 are not preferred in this application. In contrast, formulations based largely on difunctional or higher acrylate monomers show high gloss levels and are more suited to use in commercial inkjet applications.

In addition, all samples with the exception of that based on the monomer ACMO cured with a single pass of 50mJ/cm² UV from either the medium pressure mercury or the 395nm LED lamp. The lack of cure of the sample containing ACMO was demonstrated at doses up to 1000 mJ/cm² for the medium pressure mercury lamp and up to 1170 mJ/cm² for the LED lamp. This lack of cure is explainable by its nitrogen functionality inhibiting the cationic cure process. This is a key piece of evidence to support the claim that the curing process in this invention is predominantly cationic in nature and not significantly an intra-penetrating network of cationically and free radically cured segments.

### COMPARATIVE EXAMPLE 2: Properties of cyan vinyl ether hybrid ink-jet ink

A series of compositions suitable for inkjet printing were prepared according to following formulation.

**Table 3: UV-Curable Cyan Inkjet Compositions**

| Component | % (w/w) Comparative Example 2A | % (w/w) Comparative Example 2B |
|---|---|---|
| RAPICURE DVE-3 | 71.4 | 56.3 |
| RAPICURE HBVE | 5 | 5 |
| IBOA | 10 | 25 |
| OMNICAT 440 | 2 | 2 |
| SPEEDCURE DETX | 2.5 | 2.5 |
| TEGOGLIDE 410 | 0.1 | 0.2 |
| Cyan Pigment Dispersion | 9 | 9 |
| Total | 100 | 100 |

### Notes:

- RAPICURE HBVE is the monomer hydroxybutyl vinyl ether (Ashland Specialities)

The Comparative example 2A and 2B were printed onto coated Lenetta charts at 12 µm using a red K-Bar and cured at a dose of 192 mJ/cm² using an Integration Technology SZ-180-395 395m LED. The cure was noted to be reasonably robust in the center of the print, but still wet around the edges and had a very unappealing visual character in that it was crackled/crazed in appearance.

Additional prints were made and cured at doses of 63, 80, 110 and 192 mJ/cm² under the 395 nm LED. Gloss measurements at 20° were taken for each and all found to be in the region of 25-30 in value.

These results demonstrate that the formulating style disclosed in the Hexion US published patent application 2008/0045618 Table 19, is not suited to the need of a high gloss, low viscosity fast curing inkjet ink for the latest generation of ink-jet heads.

### EXAMPLE 3: Properties of vinyl ether hybrid ink-jet inks

A series of compositions suitable for inkjet printing were prepared according to following formulation.

**Table 4: UV-Curable Inkjet Compositions**

| Material % (w/w) | Comparative Examples | | | | Inventive Examples | | | |
|---|---|---|---|---|---|---|---|---|
| | 3A | 3B | 3C | 3D | 3E | 3F | 3G | 3H |
| VEEA | 40.5 | 38.88 | 27 | 32 | | | | |
| HDDA | 31.88 | 27 | 45.65 | 37.78 | | | | |
| TCDDMDA | | | | | 28.5 | 26.3 | 29.5 | 30.4 |
| RAPICURE DVE-3 | | | | | 55.1 | 50.8 | 57.0 | 58.7 |
| CN965 | 0.5 | | 1 | | | | | |
| SPEEDCURE DETX | 6 | 6 | 6 | 6 | 2.5 | 2.5 | 2.5 | 2.5 |
| OMNIRAD 380 | 1.1 | 1.1 | 1.1 | 1.1 | | | | |
| Omnicat C440 | | | | | 2 | 2 | 2 | 2 |
| CHIVACURE TPO | 4.9 | 4.9 | 4.9 | 4.9 | | | | |
| EBECRYL P116 HP | 3 | 3 | 3 | 6 | | | | |
| IONOL 103 | 0.12 | 0.12 | 0.12 | 0.12 | | | | |
| GENORAD 26 | 1 | 1 | 1 | 1 | | | | |
| TEGO GLIDE 410 | 0.5 | 0.5 | 0.5 | 0.5 | 0.2 | 0.2 | 0.2 | 0.2 |
| Yellow pigment dispersion | 10.5 | | | | 11.7 | | | |
| Black pigment dispersion | | | | 9.35 | | | | 6.19 |
| Magenta pigment dispersion | | 17.5 | | | | 18.2 | | |
| Cyan pigment dispersion A | | | 9.73 | 1.25 | | | | |
| Cyan pigment dispersion B | | | | | | | 8.8 | |
| Total | 100 | 100 | 100 | 100 | 100 | 100 | 100 | 100 |

### Notes:

- CN965 is a urethane acrylate oligomer (Sartomer)
- OMNIRAD 380 is a photoinitiator Bis (2,4,6-trimethylbenzoyl) phenyl phosphine oxide (IGM Resins)
- CHIVACURE TPO is a photoinitiator 2,4,6-trimethyl benzoyl-diphenyl phosphine oxide (Chitec)
- EBECRYL P116 HP is an aminoacrylate synergist (Allnex)
- IONOL 103 is a stabilizer (Osiris Chemicals)
- GENORAD 26 is a stabilizer composition (RAHN)

Ink viscosity was measured according to the method previously defined.

**Table 5: Viscosities of UV-Curable Inkjet Compositions**

| Example | Viscosity @ 50°C (cPs) |
|---|---|
| Comparative Example 3A | 4.59 |
| Comparative Example 3B | 5.07 |
| Comparative Example 3C | 4.8 |
| Comparative Example 3D | 4.71 |
| Inventive Example 3E | 4.89 |
| Inventive Example 3F^{∗} | - |
| Inventive Example 3G | 5.85 |
| Inventive Example 3H | 5.25 |

| | |
|---|---|
| ^{∗}An accurate viscosity measurement was not obtained for Inventive Ex. 3F Magenta due to viscometer reading drift, however the observed viscosity of Ex. 3F appears to be nearly identical to Comparative Ex. 3B Magenta. | |

The data in Table 5 confirms that the examples of the present invention have suitable viscosities for preparation of yellow, magenta, cyan and black inks in the newest examples of inkjet heads with low viscosity requirements, with the comparative examples being inks formulated using a traditional approach that are also suitable for these new print heads.

### Minimum cure dose

The Comparative and Inventive Example formulations 3A-H were printed onto PE85 Top Trans substrates at 12 µm thickness using a red K-Bar and cured at a series of doses using either a 350W/inch medium pressure mercury arc lamp or an Integration Technology SZ-180-395 395m LED. A piece of Incada XL substrate was then placed on top with the rough side in contact with the print surface and the 2 layers subjected to a force of 10 tons for 5 seconds in a Specac blocking tester. When separated, the degree of color transfer to the Incada substrate was quantified by color measurement, and the dose at which essentially no color is transferred is deemed to be the minimum cure dose.

**Table 6: Minimum cure dose of UV-Curable Inkjet Compositions**

| Example | LED Minimum cure dose (mJ/cm²) | Med. Pressure mercury minimum cure dose (mJ/cm²) |
|---|---|---|
| Comparative Example 3A | 289 | 96 |
| Comparative Example 3B | 289 | 96 |
| Comparative Example 3C | 399 | 148 |
| Comparative Example 3D | 289 | 118 |
| Inventive Example 3E | 55 | 26 |
| Inventive Example 3F | 26 | 26 |
| Inventive Example 3G | 26 | 17 |
| Inventive Example 3H | 26 | 17 |

The data in Table 6 demonstrates that the inventive inks of the present invention require exceptionally low cure doses relative to a representative traditional formulating style suited to low viscosity inkjet heads. The difference is particularly pronounced using an LED light source.

### Solvent resistance

The Comparative and Inventive Example formulations 3A-H were printed onto coated Lenetta charts at 12 µm using a red K-Bar and cured at a dose of 200mJ/cm² using a 350W/inch medium pressure mercury arc lamp. The print was placed in a Satra STM421 rub tester and subjected to 100 rubs with an MEK (methyl ethyl ketone) soaked pad to test the solvent resistance of the ink. If the ink is removed by this action, exposing the substrate below to any degree, then it is deemed to have failed.

**Table 7: Solvent Resistance of UV-Curable Inkjet Compositions**

| Example | No of MEK solvent rubs |
|---|---|
| Comparative Example 3A | >100 |
| Comparative Example 3B | >100 |
| Comparative Example 3C | >100 |
| Comparative Example 3D | >100 |
| Inventive Example 3E | >100 |
| Inventive Example 3F | >100 |
| Inventive Example 3G | >100 |
| Inventive Example 3H | >100 |

The data in Table 7 demonstrates that the inks of the present invention have good solvent resistance properties and are suitable for use in a wide range of applications.

### Adhesion

The Comparative Example 3C and Inventive Example 3G were printed onto a series of different test substrates at 12 µm using a red K-Bar and cured at a dose of 150 mJ/cm² using a 350W/inch medium pressure mercury arc lamp. The prints were tested according to the well-known cross hatch adhesion test immediately after cure and rated as 0 (good) to 5 (poor) on the ISO scale.

**Table 8: Adhesion of UV-Curable Inkjet Cyan Compositions**

| Sustrate | Adhesion Test Score | |
|---|---|---|
| | Comparative Example 3C | Inventive Example 3G |
| Dibond | 5 | 5 |
| Acrylic | 5 | 5 |
| Polycarbonate | 0 | 0 |
| PE85 TopTrans (label substrate) | 0 | 0 |
| Rigid PVC | 0 | 0 |
| Dickinson Jet Vinyl | 0 | 0 |

The data in Table 8 demonstrates that the inks of the present invention have a similar adhesion profile to comparative free radical curing inks and are suitable for use in a wide range of applications.

### EXAMPLE 4: Curing Mechanism of cyan vinyl ether hybrid ink-jet ink - influence of thioxanthone sensitizer

A series of compositions suitable for inkjet printing were prepared according to the formulation outlined in Tables 9 and 10. Samples were printed onto coated Lenetta chart substrate at a thickness of 12 microns using a Red "k-bar" applicator. The prints were cured using UV light from an Integration Technology SZ-180-395 395m LED lamp, and the minimum dose required to achieve a cure state whereby there was no physical marking of the ink over the black area of the substrate based on the well-known "thumb twist test" recorded.

**Table 9: UV-Curable Cyan Inkjet Compositions**

| Component | % (w/w) |
|---|---|
| Mixture of 1:1:3.8 of DiTMPTA, SR341 and RAPICURE DVE-3 | 84.5 - 88.5 |
| OMNICAT 440 | 2 |
| SPEEDCURE DETX | 0-4 (see Table 10) |
| TEGOGLIDE 410 | 0.5 |
| Cyan Pigment Dispersion | 9 |

### Notes:

- SR341 is the monomer 3-methyl 1,5- pentanediol diacrylate (Sartomer)

**Table 10: UV-Curable Cyan Inkjet Compositions**

| Example | % (w/w) DETX | Minimum Cure Dose (mJ/cm²) |
|---|---|---|
| Comparative Example 4A | 0 | >1000 |
| Inventive Example 4B | 0.2 | 136 |
| Inventive Example 4C | 0.5 | 72 |
| Inventive Example 4D | 0.8 | 36 |
| Inventive Example 4E | 1.6 | 31 |
| Inventive Example 4F | 2.4 | 26 |
| Inventive Example 4G | 4 | 31 |

Table 10 demonstrates that good curing is obtained using the present invention at levels of as little as 0.2% of the thioxanthone sensitizer DETX. As would be appreciated by those skilled in the art, 0.2% of DETX is low, and insufficient to substantially affect the cure speed via a free radical curing mechanism. The behavior clearly points towards DETX acting solely as a sensitizer for the iodonium salt which initiates polymerization mechanism by a cationic curing mechanism. On this basis, the invention is distinctly different to what is known in the art.

### Curing Mechanism of cyan vinyl ether hybrid ink-jet ink - influence of cationic PI

Two compositions suitable for inkjet printing were prepared according to the formulation outlined in Table 11. Samples were printed onto coated Lenetta chart substrate at a thickness of 12 microns using a Red "k-bar" applicator and cured at a series of doses using either a 350W/inch medium pressure mercury arc lamp or an Integration Technology SZ-180-395 395m LED, and the minimum dose required to achieve a cure state whereby there was no physical marking of the ink over the black area of the substrate based on the well-known "thumb twist test" recorded.

**Table 11: UV-Curable Cyan Inkjet Compositions**

| Component | % (w/w) | |
|---|---|---|
| | Comparative Example 5A | Inventive Example 5B |
| RAPICURE DVE-3 | 57 | 57 |
| TCDDMDA | 29.5 | 29.5 |
| OMNICAT 440 | | 2 |
| Omnirad TPO | 2 | |
| SPEEDCURE DETX | 2.5 | 2.5 |
| TEGOGLIDE 410 | 0.2 | 0.2 |
| Cyan Pigment Dispersion | 8.8 | 8.8 |

### Notes:

- Omnirad TPO is the free radical photoinitiator 2,4,6-trimethyl benzoyl-diphenyl phosphine oxide (IGM Resins)

**Table 12: UV-Curable Cyan Inkjet Compositions**

| Example | Minimum Cure Dose (mJ/cm²) | |
|---|---|---|
| | Medium pressure mercury lamp | LED lamp |
| Comparative Example 5A | >1000 | >1170 |
| Inventive Example 5B | 25 | 31 |

Table 12 demonstrates that there is no meaningful cure possible if the cationic photoinitiator is substituted for the free radical photoinitiator Omnirad TPO, known by those skilled in the art to be highly reactive in the free radical initiated curing of acrylate-based inkjet inks. As would be appreciated by those skilled in the art, this behavior clearly points towards the polymerization mechanism of the present invention being wholly cationic curing in nature. On this basis, the invention is distinctly different to available what is known in the art.

### EXAMPLE 5: Properties of white vinyl ether hybrid ink-jet ink

A white ink of composition suitable for inkjet printing was prepared according to following formulation.

**Table 13: UV-Curable white Inkjet Compositions**

| Component | % (w/w) |
|---|---|
| RAPICURE DVE-3 | 48.8 |
| OMNICAT 440 | 2 |
| SPEEDCURE DETX | 1 |
| TEGOGLIDE 410 | 0.2 |
| White Pigment Dispersion | 12.5 |
| SR833 | 23 |
| Total | 100.0 |

### Notes:

- SR833S is the difunctional monomer tricyclodecane dimethanol diacrylate from Arkema (also referred to herein as TCDDMDA)
- White Pigment Dispersion is a proprietary dispersion containing 50.0% (w/w) of Titanium Dioxide pigment, the remainder comprising the dispersant, stabilizers and the monomer CTFA (SR531 ex Arkema)

The Experimental ink of Example 5 was printed onto a coated Lenetta chart substrate at a thickness of approx. 12 µm using a Red "k-bar" applicator. The prints were cured using Integration Technology SZ-180-395 395m LED lamp. The ink was found to be fully cured at a minimum dose of 50 mJ/cm² and when cured at a dose of 200 mJ/cm² had an MEK rub resistance of 18 rubs using a cotton bud soaked in methyl ethyl ketone.

Ink viscosity was recorded as described above using a Brookfield DVII viscometer at a temperature of 50°C and found to be 4.6 cPs.

### EXAMPLE 6: Properties of magenta vinyl ether hybrid ink-jet inks using alternate vinyl ether monomer

A magenta ink of composition suitable for inkjet printing was prepared according to following formulation.

**Table 14: UV-Curable Magenta Inkjet Compositions**

| Component | % (w/w) |
|---|---|
| Diethylene glycol divinyl ether | 50.8 |
| OMNICAT 440 | 2 |
| SPEEDCURE DETX | 2.5 |
| TEGOGLIDE 410 | 0.2 |
| Magenta Pigment Dispersion | 18.2 |
| SR833 | 26.3 |
| Total | 100.0 |

### Notes:

- Diethylene glycol divinyl ether was obtained from Sigma-Aldrich
- Magenta Pigment Dispersion is a proprietary dispersion from SunChemical that comprises a pigment, dispersant, stabilizers and the monomer CTFA

The Experimental ink of Example 6 was printed onto a coated Lenetta chart substrate at a thickness of approx. 12 µm using a Red "k-bar" applicator. The prints were cured using Integration Technology SZ-180-395 395m LED lamp. The ink was found to be fully cured at a minimum dose of 50 mJ/cm² and when cured at a dose of 200 mJ/cm² had an MEK rub resistance of >100 rubs using a cotton bud soaked in methyl ethyl ketone.

Ink viscosity was recorded as described above using a Brookfield DVII viscometer at a temperature of 50°C and found to be 7.9 cPs.

### EXAMPLE 7: Properties of magenta vinyl ether hybrid ink-jet inks using alternate cationic photoinitiator

A magenta ink of composition suitable for inkjet printing was prepared according to following formulation.

**Table 14: UV-Curable Magenta Inkjet Compositions**

| Component | % (w/w) |
|---|---|
| RAPICURE DVE-3 | 50.8 |
| OMNICAT 440 | 2 |
| Thioxanthone | 2.5 |
| TEGOGLIDE 410 | 0.2 |
| Magenta Pigment Dispersion | 18.2 |
| SR833 | 26.3 |
| Total | 100.0 |

### Notes:

- Bis(4-tert-butylphenyl)iodonium hexafluorophosphate was obtained from Sigma Aldrich
- Magenta Pigment Dispersion is a proprietary dispersion from Sun Chemical that comprises a pigment, dispersant, stabilizers and the monomer CTFA

The Experimental ink of Example 7 was printed onto a coated Lenetta chart substrate at a thickness of approx. 12 µm using a Red "k-bar" applicator. The prints were cured using Integration Technology SZ-180-395 395m LED lamp. The ink was found to be fully cured at a minimum dose of 150 mJ/cm² and when cured at a dose of 200 mJ/cm² had an MEK rub resistance of >100 rubs using a cotton bud soaked in methyl ethyl ketone.

Ink viscosity was recorded as described above using a Brookfield DVII viscometer at a temperature of 50°C and found to be 5.4 cPs.

### EXAMPLE 8: Properties of magenta vinyl ether hybrid ink-jet inks using alternate thioxanthone sensitizers

Magenta inks of composition suitable for inkjet printing were prepared according to following formulation.

**Table 15: UV-Curable Magenta Inkjet Compositions**

| | % (w/w) | |
|---|---|---|
| Component | EXAMPLE 8A | EXAMPLE 8B |
| RAPICURE DVE-3 | 50.8 | 50.8 |
| OMNICAT440 | 2 | 2 |
| OMNIRAD ITX | 2.5 | |
| OMNIPOL TX | | 2.5 |
| TEGOGLIDE 410 | 0.2 | 0.2 |
| Magenta Pigment Dispersion | 18.2 | 18.2 |
| SR833 | 26.3 | 26.3 |
| Total | 100.0 | 100.0 |

### Notes:

- OMNIRAD ITX is 2-isopropyl thioxanthone (IGM Resins)
- OMNIPOL TX is the diester of carboxymethoxy thioxanthone and polytetramethylene glycol 250 (IGM Resins)
- Magenta Pigment Dispersion is a proprietary dispersion from SunChemical that comprises a pigment, dispersant, stabilizers and the monomer CTFA

The Experimental inks of Example 8A and 8B were printed onto a coated Lenetta chart substrate at a thickness of approx. 12 µm using a Red "k-bar" applicator. The prints were cured using Integration Technology SZ-180-395 395m LED lamp.

**Table 16: UV-Curable Magenta Inkjet Test results**

| Example | LED Minimum cure sode (mJ/cm²) | MEK solvent rubs | Viscosity at 50°C (cPs) |
|---|---|---|---|
| Example 8A | 150 | >100 | 5.5 |
| Example 8B | 150 | >100 | 8.5 |

MEK rub resistance was measured using a cotton bud soaked in methyl ethyl ketone.

Ink viscosity was recorded as described above using a Brookfield DVII viscometer at a temperature of 50°C.

### EXAMPLE 9: Properties of vinyl ether hybrid ink-jet varnish

A series of compositions suitable for varnishes were prepared according to following formulation.

**Table 17: UV-Curable Non-Pigmented Compositions**

| Material%(w/w) | 9A | 9B | 9C | 9D | 9E | 9F |
|---|---|---|---|---|---|---|
| RAPICURE DVE-3 | 64.5 | 63.55 | 64.3 | 56.8 | 56.55 | 53.55 |
| TCDDMDA | 32.3 | 34.0 | 34.0 | 30.0 | 31.0 | 24.00 |
| SPEEDCURE DETX | 1.0 | 0.75 | 0.50 | 1.0 | 0.75 | 0.75 |
| Omnicat C440 | 2.0 | 1.50 | 1.0 | 2.0 | 1.50 | 1.50 |
| CN965 | - | - | - | 10.0 | 10.0 | 20.0 |
| TEGO GLIDE 410 | 0.2 | 0.0 | 0.2 | 0.2 | 0.2 | 0.5 |
| Total | 100 | 100 | 100 | 100 | 100 | 100 |

Example formulations 9A-F were printed onto a coated Lenetta Form 2A Opacity chart substrate at a thickness of approximately 12 µm using a red "K-Bar" applicator. The prints were cured using UV light from either a medium pressure mercury arc lamp or using an Integration Technology SZ-180-395 395m LED lamp.

Ink viscosity was recorded as described above using a Brookfield DVII viscometer at the temperatures indicated in Table 18.

**Table 18: Viscosities (cPs) of UV-Curable Non-Pigmented Compositions**

| Example | Viscosity @ 30°C (cPs) | Viscosity @ 40°C (cPs) | Viscosity @ 45°C (cPs) |
|---|---|---|---|
| Example 9A | 5.91 | 4.71 | 3.96 |
| Example 9B | 6.00 | 4.56 | 3.90 |
| Example 9C | 5.82 | 4.38 | 3.78 |
| Example 9D | 12.7 | 9.87 | 7.74 |
| Example 9E | 12.2 | 9.36 | 7.98 |
| Example 9F | 25.1 | 17.00 | 14.4 |

The data in Table 18 confirms that the examples of the present invention have suitable viscosities for varnishes.

Examples 9D, 9E and 9F show that it is possible to raise the viscosity of the varnish composition by introducing a urethane acrylate oligomer, in this case CN965 (ex. Sartomer). This indicates that the hybrid acrylate-vinyl ether formulations of the present invention can be viscosity modified to meet the requirements of other printing/coating applications, such as UV flexographic printing.

### Solvent resistance

The solvent resistance of the cured prints was assessed by determining the number of double rubs with a cotton wool bud soaked in MEK required to disrupt the varnish film.

**Table 19: Solvent Resistance of UV-Curable Non-Pigmented Compositions**

| Example | 9A | 9B | 9C | 9D | 9E | 9F |
|---|---|---|---|---|---|---|
| Dose | **UV-LED Cure (MEK Double Rubs)** | | | | | |
| 25 mJ/cm² | >100 | >100 | 60 | >100 | >100 | >100 |
| 50 mJ/cm² | >100 | >100 | 80 | >100 | >100 | >100 |
| 100 mJ/cm² | >100 | >100 | >100 | >100 | >100 | >100 |

| | **Medium Pressure Mercury Lamp UV Cure (MEK Double Rubs)** | | | | | |
|---|---|---|---|---|---|---|
| 50 mJ/cm² | >100 | >100 | >100 | >100 | >100 | >100 |
| 100 mJ/cm² | >100 | >100 | >100 | >100 | >100 | >100 |

Example 9 demonstrates that the invention produces fast curing varnishes. Even when the total photoinitiator concentration (Omnicat 440 and DTEX) was reduced to 1.5% (w/w), Example 9C, it was possible to achieve cured varnish films with excellent solvent resistance when exposed to a UV-LED dose of 100 mJ/cm² and a UV dose from a standard medium pressure mercury bulb of only 50 mJ/cm². With a total photoinitiator concentration (Omnicat 440 and DTEX) of 2.25% or greater; Examples 9A, 9B, 9D, 9E and 9F, excellent cure down to UV-LED doses of 25 mJ/cm² was achieved.

### EXAMPLE 10: Properties of vinyl ether hybrid ink-jet varnish

A varnish composition suitable for inkjet printing was prepared according to following formulation.

**Table 20: UV-Curable varnish Inkjet Compositions**

| Component | % (w/w) |
|---|---|
| RAPICURE DVE-3 | 64.5 |
| OMNICAT 440 | 2 |
| SPEEDCURE DETX | 1 |
| TEGOGLIDE 410 | 0.2 |
| SR833S | 32.3 |
| Total | 100.0 |

The Experimental varnish Example 10 was printed onto a coated Lenetta chart substrate at a thickness of approx. 12 µm using a Red "k-bar" applicator. The prints were cured using Integration Technology SZ-180-395 395m LED lamp. The varnish was found to be fully cured at a minimum dose of 50 mJ/cm² and when cured at a dose of 200 mJ/cm² had an MEK rub resistance of >100 rubs using a cotton bud soaked in methyl ethyl ketone.

Ink viscosity was recorded as described above using a Brookfield DVII viscometer at a temperature of 50°C and found to be 3.5 cPs.

## Claims

1. A UV-curable ink or coating composition comprising greater than 20% (w/w) of a vinyl ether containing monomer and/or oligomer, greater than 25% (w/w) of an acrylate monomer and/or oligomer, and a cationic photoinitiator, wherein said acrylate monomer and/or oligomer is multifunctional.

2. The composition according to claim 1 comprising greater than 40% (w/w) of vinyl ether containing monomer or oligomer.

3. The composition according to any preceding claim comprising greater than 30% (w/w) of acrylate monomer or oligomer.

4. The composition according to any preceding claims, comprising less than 10% (w/w) of a monofunctional acrylate monomer or oligomer.

5. The composition according to any preceding claim which further comprises a UV sensitizer, where the sensitizer may be selected from any of a thioxanthone derivative and anthracene derivative.

6. The composition according to any preceding claim wherein the cationic photoinitiator is an iodonium salt type or wherein the cationic photoinitiator is a sulphonium salt type.

7. The composition according to any preceding claim wherein the concentration of the cationic photoinitiator is less than 5.0% (w/w).

8. The composition according to any one of claims 5 - 7, wherein the concentration of the UV sensitizer is less than 4.0% (w/w) and/or wherein the ratio of cationic photoinitiator to sensitizer is greater than 1:1 and/or wherein the total combined amount of cationic photoinitiator and sensitizer is less than 6.0% (w/w) of the total composition.

9. The composition according to any preceding claim comprising less than 2% (w/w) of a free radical photoinitiator and/or which is suitable for inkjet printing.

10. The composition according to any preceding claim, which has a viscosity of less than 10.0mPa.s at 50 °C when measured using a Brookfield DV-II+ Pro Viscometer equipped with Spindle no. 18, at 100rpm, preferably which has a viscosity of less than 8.0mPa.s at 50 °C when measured using a Brookfield DV-II+ Pro Viscometer equipped with Spindle no. 18, at 100rpm, more preferably which has a viscosity of less than 6.0mPa.s at 50 °C when measured using a Brookfield DV-II+ Pro Viscometer equipped with Spindle no. 18, at 100rpm.

11. A process for providing a cured ink or coating composition comprising applying the composition of any one of the preceding claims onto a substrate and curing.

12. A process according to claim 11 wherein said curing is cationic curing and/or wherein said curing is performed in the absence of a cycloaliphatic epoxide or oxetane co-reactant and/or wherein the composition is cured with a UV dose of less than 200 mJ/cm², preferably wherein the composition is cured with a UV dose of less than 100 mJ/cm².

13. The process according to any one of claims 11 - 12, wherein the composition is cured under the action of a UV-LED light source and/or wherein the composition is printed via a single-pass inkjet printing process.

14. A printed article comprising 1 or more layers of the composition of any one of claims 1 - 10.

15. A printed article resulting from the process of any one of claims 11 - 13.

## Patentansprüche

1. UV-härtbare Tinten- oder Beschichtungszusammensetzung, umfassend mehr als 20 % (Gew./Gew.) eines Vinylether enthaltenden Monomers und/oder Oligomers, mehr als 25 % (Gew./Gew.) eines Acrylatmonomers und/oder -oligomers, und einen kationischen Photoinitiator, wobei das Acrylatmonomer und/oder -oligomer multifunktionell ist.

2. Zusammensetzung nach Anspruch 1, umfassend mehr als 40 % (Gew./Gew.) Vinylether enthaltendes Monomer oder Oligomer.

3. Zusammensetzung nach einem der vorhergehenden Ansprüche, umfassend mehr als 30 % (Gew./Gew.) Acrylatmonomer oder -oligomer.

4. Zusammensetzung nach einem der vorhergehenden Ansprüche, umfassend weniger als 10 % (Gew./Gew.) monofunktionelles Acrylatmonomer oder -oligomer.

5. Zusammensetzung nach einem der vorhergehenden Ansprüche, die des Weiteren ein UV-Sensibilisierungsmittel umfasst, wobei das Sensibilisierungsmittel ausgewählt sein kann aus jedwedem von einem Thioxanthonderivat und Anthracenderivat.

6. Zusammensetzung nach einem der vorhergehenden Ansprüche, wobei der kationische Photoinitiator ein Iodoniumsalztyp ist, oder wobei der kationische Photoinitiator ein Sulfoniumsalztyp ist.

7. Zusammensetzung nach einem der vorhergehenden Ansprüche, wobei die Konzentration des kationischen Photoinitiators kleiner als 5,0 % (Gew./Gew.) ist.

8. Zusammensetzung nach einem der Ansprüche 5 bis 7, wobei die Konzentration des UV-Sensibilisierungsmittels kleiner als 4,0 % (Gew./Gew.) ist, und/oder wobei das Verhältnis von kationischem Photoinitiator zu Sensibilisierungsmittel größer als 1:1 ist, und/oder wobei die gesamte kombinierte Menge an kationischem Photoinitiator und Sensibilisierungsmittel weniger als 6,0 % (Gew./Gew.) der Gesamtzusammensetzung beträgt.

9. Zusammensetzung nach einem der vorhergehenden Ansprüche, umfassend weniger als 2 % (Gew./Gew.) eines freiradikalischen Photoinitiators, und/oder der für Tintenstrahldruck geeignet ist.

10. Zusammensetzung nach einem der vorhergehenden Ansprüche, die eine Viskosität von weniger als 10,0 mPa·s bei 50 °C, gemessen unter Verwendung eines Brookfield DV-II+ Pro Viskometers, das mit einer Spindel Nr. 18 ausgestattet ist, bei 100 UpM, vorzugsweise eine Viskosität von weniger als 8,0 mPa·s bei 50 °C, gemessen unter Verwendung eines Brookfield DV-II+ Pro Viskometers, das mit einer Spindel Nr. 18 ausgestattet ist, bei 100 UpM, bevorzugter eine Viskosität von weniger als 6,0 mPa·s bei 50 °C aufweist, gemessen unter Verwendung eines Brookfield DV-II+ Pro Viskometers, das mit einer Spindel Nr. 18 ausgestattet ist, bei 100 UpM.

11. Verfahren zur Bereitstellung einer gehärteten Tinten- oder Beschichtungszusammensetzung, umfassend Aufbringen der Zusammensetzung gemäß einem der vorhergehenden Ansprüche auf ein Substrat, sowie Härten.

12. Verfahren nach Anspruch 11, wobei das Härten kationisches Härten ist, und/oder wobei das Härten in Abwesenheit eines cycloaliphatischen Epoxids oder Oxetan-Coreaktanten durchgeführt wird, und/oder wobei die Zusammensetzung mit einer UV-Dosis von weniger als 200 mJ/cm² gehärtet wird, vorzugsweise wobei die Zusammensetzung mit einer UV-Dosis von weniger als 100 mJ/cm² gehärtet wird.

13. Verfahren nach einem der Ansprüche 11 bis 12, wobei die Zusammensetzung unter Einwirkung einer UV-LED-Lichtquelle gehärtet wird, und/oder wobei die Zusammensetzung mittels eines Single-Pass-Tintenstrahldruckverfahrens gedruckt wird.

14. Gedruckter Artikel, umfassend 1 oder mehrere Schichten der Zusammensetzung nach einem der Ansprüche 1 bis 10.

15. Gedruckter Artikel, der aus dem Verfahren nach einem der Ansprüche 11 bis 13 resultiert.

## Revendications

1. Composition d'encre ou de revêtement durcissable par UV, comprenant plus de 20 % (p/p) d'un éther vinylique contenant un monomère et/ou un oligomère, plus de 25 % (p/p) d'un monomère et/ou oligomère acrylate, et un photoinitiateur cationique, dans laquelle ledit monomère et/ou oligomère acrylate est multifonctionnel.

2. Composition selon la revendication 1, comprenant plus de 40 % (p/p) d'éther vinylique contenant un monomère ou un oligomère.

3. Composition selon l'une quelconque des revendications précédentes, comprenant plus de 30 % (p/p) de monomère ou d'oligomère acrylate.

4. Composition selon l'une quelconque des revendications précédentes, comprenant moins de 10 % (p/p) d'un monomère ou oligomère acrylate monofonctionnel.

5. Composition selon l'une quelconque des revendications précédentes, laquelle comprend en outre un agent de sensibilisation aux UV, l'agent de sensibilisation pouvant être sélectionné parmi n'importe lequel d'un dérivé de thioxanthone et d'un dérivé d'anthracéne.

6. Composition selon l'une quelconque des revendications précédentes, dans laquelle le photoinitiateur cationique est un type de sel d'iodonium ou dans laquelle le photoinitiateur cationique est un type de sel de sulfonium.

7. Composition selon l'une quelconque des revendications précédentes, dans laquelle la concentration du photoinitiateur cationique est inférieure à 5,0 % (p/p).

8. Composition selon l'une quelconque des revendications 5 à 7, dans laquelle la concentration de l'agent de sensibilisation aux UV est inférieure à 4,0 % (p/p) et/ou dans laquelle le rapport du photoinitiateur cationique à l'agent de sensibilisation est supérieur à 1:1 et/ou dans laquelle la quantité totale combinée de photoinitiateur cationique et d'agent de sensibilisation est inférieure à 6,0 % (p/p) de la composition totale.

9. Composition selon l'une quelconque des revendications précédentes, comprenant moins de 2 % (p/p) d'un photoinitiateur radicalaire et/ou convenant pour l'impression au jet d'encre.

10. Composition selon l'une quelconque des revendications précédentes, laquelle a une viscosité inférieure à 10,0 mPa.s à 50 °C lorsque celle-ci est mesurée à l'aide d'un viscosimètre Brookfield DV-II+ Pro équipé de la broche n° 18, à 100 tr/min, laquelle a préférablement une viscosité inférieure à 8,0 mPa.s à 50 °C lorsque celle-ci est mesurée à l'aide d'un viscosimètre Brookfield DV-II+ Pro équipé de la broche n° 18, à 100 tr/min, laquelle a plus préférablement une viscosité inférieure à 6,0 mPa.s à 50 °C lorsque celle-ci est mesurée à l'aide d'un viscosimètre Brookfield DV-II+ Pro équipé de la broche n° 18, à 100 tr/min.

11. Procédé de production d'une composition d'encre ou de revêtement durcie, comprenant l'application de la composition selon l'une quelconque des revendications précédentes sur un substrat et son durcissement.

12. Procédé selon la revendication 11, dans lequel ledit durcissement est un durcissement cationique et/ou dans lequel ledit durcissement est effectué en l'absence de co-réactif époxyde cycloaliphatique ou oxétane et/ou dans lequel la composition est durcie avec une dose d'UV inférieure à 200 mJ/cm², préférablement dans lequel la composition est durcie avec une dose d'UV inférieure à 100 mJ/cm².

13. Procédé selon l'une quelconque des revendications 11 ou 12, dans lequel la composition est durcie sous l'action d'une source lumineuse UV-LED et/ou dans lequel la composition est imprimée en utilisant un procédé d'impression au jet d'encre en une seule passe.

14. Article imprimé comprenant 1 couche ou plus de la composition selon l'une quelconque des revendications 1 à 10.

15. Article imprimé obtenu par le procédé selon l'une quelconque des revendications 11 à 13.
